(19) Europäisches Patentamt / European Patent Office / Office européen des brevets

(11) **EP 3 156 460 A1**

(12) **EUROPÄISCHE PATENTANMELDUNG**

(43) Veröffentlichungstag:
   **19.04.2017 Patentblatt 2017/16**

(21) Anmeldenummer: **15189545.5**

(22) Anmeldetag: **13.10.2015**

(51) Int Cl.:
   *C09D 5/33* (2006.01)     *C09D 5/04* (2006.01)
   *C09D 5/08* (2006.01)     *C09D 5/22* (2006.01)
   *C09D 5/29* (2006.01)     *E04C 5/01* (2006.01)
   *E04C 5/08* (2006.01)     *G01N 31/22* (2006.01)
   *G01N 17/00* (2006.01)    *G01N 21/64* (2006.01)
   *G01N 21/91* (2006.01)

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**
   Benannte Validierungsstaaten:
   **MA**

(71) Anmelder: **wertec GmbH**
   **1050 Wien (AT)**

(72) Erfinder: **FRÜHAUF, Martin**
   **1010 Wien (AT)**

(74) Vertreter: **Sonn & Partner Patentanwälte**
   **Riemergasse 14**
   **1010 Wien (AT)**

(54) **KORROSIONSSCHUTZMITTEL AUF ORGANISCHER BASIS FÜR EINE METALLSTRUKTUR, INSBESONDERE FÜR SPANNSTAHL**

(57)  Die vorliegende Erfindung stellt ein Korrosionsschutzmittel für eine Metalloberfläche, insbesondere von Spannstahl, zur Verfügung, wobei das Korrosionsschutzmittel eine organische Komponente, vorzugsweise ein Öl, Fett oder Wachs, umfasst. Das erfindungsgemäße Korrosionsschutzmittel ist dadurch gekennzeichnet, dass es lichtdurchlässig ist und ferner einen Indikator, der auf eine Korrosion der Metalloberfläche mit einer Änderung seines Absorptionsspektrums im Bereich des ultravioletten, des sichtbaren oder des infraroten Lichts, insbesondere mit Farbumschlag, reagiert, umfasst. Ferner werden eine Metallstruktur, versehen mit dem erfindungsgemäßen Korrosionsschutzmittel, eine Vorrichtung an der Metallstruktur und ein Verfahren zur Überprüfung der Metallstruktur erfindungsgemäß zur Verfügung gestellt.

EP 3 156 460 A1

**Beschreibung**

Das Gebiet der vorliegenden Erfindung ist das der Korrosionsschutzmittel mit organischer Komponente, z.B. auf Öl-, Wachs- oder Fettbasis, für Metalloberflächen, insbesondere von Spannstahl.

Bei Betonkonstruktionen werden üblicherweise Vorspannsysteme in Form von Stahleinlagen oder Spanngliedern verwendet. Dabei stützen sich die gedehnten Spannglieder durch ihre Anker oder direkt durch Verbund mit dem Beton auf dem Beton ab, wodurch dieser eine Druckbelastung erhält. Dieses Verfahren gleicht die mangelnde Zugspannfestigkeit des Betons aus und erzeugt die deutlich belastbareren Druckspannungen. Das System findet bei Geoankern, Deckenkonstruktionen, Turmkonstruktionen, Brückenbau und vielen anderen Applikationen Anwendung.

Beispielsweise werden dazu Spanneinrichtungen bestehend aus Stäben, einzelnen Drähten oder Litzen, meist aus hochfestem Stahl, verwendet. Bei den unterschiedlichen Spannstahltypen sind 7-drähtige Spannstahllitzen am weitesten verbreitet. Drei Typen von Litzen sind derzeit allgemein auf dem Markt erhältlich: unbeschichtete Litzen, Litzen mit metallischen und mit nicht metallischen Beschichtungen als werksseitig vorgesehenen Korrosionsschutz und Litzen, die mit Kunststoff ummantelt sind, wobei der Hohlraum zwischen Mantel und Litze mit einer Korrosionsschutzmasse gefüllt ist. Letztere werden vom Fachmann als Monolitzen bezeichnet.

Spannstahl (z.B. Monolitzen), wie er beispielsweise bei Spannbeton eingesetzt wird (es wird hierbei auch von Bewehrung gesprochen), ist insbesondere aufgrund der hohen Zugspannung sehr korrosionsempfindlich. Im Stand der Technik sind Korrosionsschutzmassen für Spannstahl bekannt, diverse Fette sowie Wachse aus der Erdölraffination sind dafür gebräuchlich.

Die DE 3806350 A1 offenbart eine Korrosionsbeschichtungsmasse für Stahl, insbesondere für Bewehrungsstahl in Beton, enthaltend die Mischungskomponenten Leinöl, Holzöl oder Standöl, Kalziumstearat, Aluminiumsilikat, Bleimennige, geblasenenes Bitumen, n-Butanol, Cobaltnaphthenat und Lösungsmittel in definierten Anteilen.

Die DE 3644414 A1 bezieht sich auf eine Kunststoffmasse zum Verfüllen der Hohlräume innerhalb eines, mit einer Vielzahl aus parallelen Stahldrähten bzw. Stahllitzen gefüllten Kunststoffrohres, wie es z. B. als Zugglied für Schrägkabelbrücken o.ä. verwendet wird, bestehend aus einem zunächst dünnflüssigen Kunststoff, z. B. aus Polyurethan, welcher durch Zugabe eines Härters in einen festen, leicht verformbaren Zustand übergeht, wobei der Kunststoff in der Flüssigphase mit mehlfeinen, festen, basischen Partikeln, z. B. aus Zement, Flugasche o.ä., und mit geschlossenporigen, leicht verformbaren, kompressiblen Partikeln, z. B. aus gemahlenem Schaumstoff, Kork o.ä. vermischt ist. Die Kunststoffmasse gemäß der DE 3644414 A1 ist ein Korrosionsschutzmittel, wie beispielsweise dem zweiten Absatz entnommen werden kann.

Die EP 0105839 A2 offenbart Spannelemente mit einer zweischichtigen Kunststoffumhüllung, wobei die innere Schicht verformbar, bei Raumtemperatur lagerstabil und thermisch härtbar und die äußere Schicht eine strahlungsgehärtete Kunststoffschicht ist. Solche Spannelemente eignen sich zur Herstellung von tragenden Konstruktionselementen, besonders für Betonträgerwerke und Felsverankerungen. Die Kunststoffumhüllung soll nach der Verarbeitung zu z.B. Betontragewerken einen wirksamen Korrosionsschutz darstellen.

Im Gebiet der vorliegenden Erfindung wurde erkannt, dass es von Vorteil ist, wenn der im Spannbeton vorhandene Spannstahl zerstörungsfrei aus dem Spannbeton zum Zwecke der Kontrolle (insbesondere auf Korrosion hin) und gegebenenfalls zum Austausch entnommen werden kann.

So bezieht sich die DE 4106309 A1 auf ein Verfahren zum Auswechseln oder zur Kontrolle von im Hüllrohr liegender vorgespannter Bewehrung mit nachträglichem Verbund in Spannbetonteilen. Als Verbundmaterial dient dabei ein lösbares thermoplastisches oder lösbares duroplastisches Kunststoffmaterial, welches zu einem beliebigen Zeitpunkt bei Temperaturerhöhung oder durch einen Lösungsvorgang mit einem Lösungsmittel oder durch den Einsatz von kunststoffverdauenden Mikroorganismen seine Verbundeigenschaften derart ändert, dass die zuvor schubfest mit dem Betonkörper verbundene Bewehrung gegebenenfalls leicht entnommen oder kontrolliert werden kann. Das Verbundmaterial soll gemäß des Ausführungsbeispiels die Spannglieder vor Korrosion oder anderen Beschädigungen schützen.

Ferner betrifft die EP 0771593 A2 ein Verfahren und eine Vorrichtung zum Freilegen und Reinigen längenmäßig begrenzter Abschnitte von Litzen aus Stahldrähten, die von einer Korrosionsschutzmasse, insbesondere Fett, umgeben und einschließlich dieser von einer Umhüllung aus Kunststoff umschlossen sind.

Verfahren im Stand der Technik zur Überprüfung von mit Korrosionsschutzmasse versehenem Spannstahl auf Korrosion sind sehr aufwändig, weil sie in der Regel das Freilegen des Spannstahls von der Korrosionsschutzmasse erfordern oder sogar das Herausziehen des Spannstahls aus der Betonkonstruktion. Es ist in der Regel jedoch nötig, den Spannstahl in regelmäßigen zeitlichen Abständen auf Korrosion zu überprüfen.

Somit besteht eine Aufgabe der vorliegenden Erfindung darin, die Überprüfung von mit einer Korrosionsschutzmasse versehenem Spannstahl auf Korrosion hin zu vereinfachen.

Die vorliegende Erfindung stellt ein Korrosionsschutzmittel (nachfolgend auch als Korrosionsschutzmasse bezeichnet) für eine Metalloberfläche zur Verfügung, wobei das Korrosionsschutzmittel eine organische Komponente umfasst. Dieses Korrosionsschutzmittel ist insbesondere für Spannstahl geeignet. Das Korrosionsschutzmittel der vorliegenden Erfindung ist dadurch gekennzeichnet, dass es lichtdurchlässig ist und ferner einen Indikator umfasst. Der Indikator reagiert auf eine Korrosion der Metalloberfläche mit einer Änderung seines Absorptionsspektrums im Bereich des ultravioletten, des sichtbaren oder des infraroten Lichts; vorzugsweise reagiert der Indikator mit Farbumschlag auf eine Korrosion der Metalloberfläche. Insbesondere umfasst das Korrosionsschutzmittel als Indikator einen Farbindikator für Metallkationen, insbesondere für Eisenkationen. In weiteren Aspekten stellt die Erfindung ein Verfahren zum Versehen einer von einem Mantel umgebenen Metallstruktur mit Korrosionsschutzmittel, eine Metallstruktur versehen mit dem erfindungsgemäßen Korrosionschutzmittel, eine Vorrichtung an einer Metallstruktur und ein Verfahren zur Überprüfung einer Metallstruktur auf Korrosion zur Verfügung.

Die vorliegende Erfindung erleichtert die Überprüfung der Metalloberfläche (insbesondere von Vorspannsystemen) auf Korrosion, indem Korrosion auch bei nicht ausgebautem Spannstahl bzw. verdeckter Metalloberfläche sichtbar bzw. detektierbar gemacht wird, wenn die Metalloberfläche damit versehen ist. Das Korrosionsschutzmittel auf der Metalloberfläche schützt die Metalloberfläche in einem gewissen Maß vor korrosionsfördernder Feuchtigkeit. Wenn die Metalloberfläche nun aber doch Feuchtigkeit (d.h. Wasser) ausgesetzt ist und korrodiert (beispielsweise, weil die Feuchtigkeitsbarrierefunktion des Korrosionsschutzmittels mit der Zeit beeinträchtigt worden ist), gehen in der Regel Metallionen in wässrige Lösung; auch der pH-Wert der Lösung kann sich dabei verändern. Wenn diese wässrige Lösung nun in Kontakt mit dem erfindungsgemäßen Korrosionsschutzmittel kommt, kommt es zu einer Änderung des Absorptionsspektrums des Indikators im Bereich des ultravioletten, des sichtbaren oder des infraroten Lichts (z.B. kommt es zum Farbumschlag des Indikators), wenn er beispielsweise mit einem Metallkation einen farbigen Komplex bildet oder abhängig vom pH-Wert seine Farbe ändert. Geschieht dies im ausreichenden Maße, ist dies detektierbar oder sogar mit freiem Auge sichtbar, weil das erfindungsgemäße Korrosionsschutzmittel lichtdurchlässig ist. Erfindungsgemäß sind Sauerstoff und Wasser (die zur Bildung von farbigem Eisenoxid, d.h. Rost, führen können) natürlich nicht als möglicher Indikator im Korrosionsschutzmittel zu verstehen, weil dies dem Korrosionsschutz zuwider laufen würde.

In einem weiter unten beschriebenen Aspekt der vorliegenden Erfindung wird ein Überprüfungsverfahren auf Korrosion (bzw. eine Vorrichtung dazu) offenbart, welches auf der Wechselwirkung evaneszenter Wellen, die von einem Lichtstrahl in einem Lichtwellenleiter verursacht werden, mit einem Indikator beruht. Hierfür ist das erfindungsgemäße Korrosionsschutzmittel hervorragend geeignet.

Im Stand der Technik sind zwar Mittel bzw. Metallüberzüge mit Metallionenindikator für gänzlich andere technische Aufgabenstellungen bekannt, die vorliegende Erfindung wird dadurch aber weder offenbart noch nahegelegt:

Die WO 2013/185131 A1 bezieht sich auf anorganische Metallüberzüge z.B. im Flugzeugbau. Weder handelt es sich dabei um ein lichtdurchlässiges Korrosionsschutzmittel wie bei der vorliegenden Erfindung, noch wird in jenem Dokument irgendeine Verbindung zu Vorspannsystemen oder dergleichen hergestellt. Außerdem ist die Aufgabe der WO 2013/185131 A1 eine gänzlich andere als die der vorliegenden Erfindung; sie besteht darin, dass der Bedeckungsgrad des anorganischen Metallüberzugs auf der Metallstruktur ("coating coverage") festgestellt werden soll.

Die DE 10 2004 050 150 A1 betrifft ein Korrosionstestmittel, welches in Verbindung mit einer Vorrichtung zur Überprüfung der schützenden Wirkung von Oberflächenbeschichtungen gegen korrosiven Angriff durch Umwelteinflüsse oder Medien eingesetzt wird. In jenem Dokument geht es, wie schon bei der vorgenannten WO 2013/185131 A1, wiederum um die Inspektion von Metallüberzügen auf metallischen Bauteilen. Das bevorzugte Lösungsmittel im Korrosionstestmittel ist Wasser, organische Lösungsmittel werden nicht erwähnt. Das Korrosionstestmittel ist auch nur zum vorübergehenden Auftragen auf das Bauteil vorgesehen. Außerdem geht klar hervor, dass jenes Korrosionstestmittel nicht als Korrosionsschutzmittel geeignet ist: Bevorzugt ist im Korrosionstestmittel jenes Dokuments ein Leitsalz enthalten, das die Korrosion sogar beschleunigen soll.

Die DE 10 2005 055 028 A1 bezieht sich auf Mittel und Verfahren zur Überprüfung von Korrosionsschutzbeschichtungen und ist technisch sehr ähnlich zur im vorigen Absatz behandelten DE 10 2004 050 150 A1. Das Mittel enthält sogar oxidierende Chemikalien als wesentliches Merkmal.

Ungebundene Vorspannsysteme (z.B. Spannstahl) können innerhalb oder außerhalb des Tragwerks (Betonquerschnitt) verlegt sein. Erstere werden als interne, zweitere als externe Vorspannsysteme bezeichnet. Korrosionsschutzmassen in ungebundenen Vorspannsystemen, insbesondere für Spannstahl, sollen üblicherweise zwei Hauptaufgaben erfüllen, nämlich die Verbesserung der Gleiteigenschaften der metallischen Spannglieder, um Reibungsverluste beim Verspannen und über die gesamten Einsatzdauer zu reduzieren, und die Verringerung bzw. Hemmung der Korrosion der metallischen Spannglieder.

Die organische Komponente des erfindungsgemäßen Korrosionsschutzmittels ist folglich vorzugsweise ein Öl, Fett oder Wachs (oder Gemische davon). Die organische Komponente dient für gewöhnlich als Feuchtigkeitsbarriere (mit anderen Worten: zur Hydrophobierung der Metalloberfläche) und insbesondere als Schmiermittel. Daher ist die organische Komponente des erfindungsgemäßen Korrosionsschutzmittels üblicherweise schlecht löslich bzw. sogar unlöslich in Wasser. Insbesondere ist das erfindungsgemäße Korrosionsschutzmittel auf einer Öl-, Fett- oder Wachsbasis vorgesehen, d.h. das Öl, Fett oder Wachs ist im Bezug auf die Gesamtmasse der Hauptbestandteil des Korrosionsschutzmittels und kann beispielsweise als Lösungsmittel oder Träger dienen.

Nach einer erfindungsgemäß bevorzugten Definition wird ein Stoffgemisch (bzw. Stoff) als Öl bezeichnet, wenn es bei einer Temperatur von 25°C flüssig ist, viskoser als Wasser ist und sich nicht mit Wasser mischen lässt (es bilden sich bei einem Mischversuch getrennte Phasen aus). Es gibt unter anderem fette Öle (Gemische aus tierischen oder pflanzlichen Fettsäuretriglyceriden), Mineralöle und Silikonöle. Ein Vertreter letzterer zwei Gruppen, insbesondere ein Vertreter der Gruppe der Mineralöl, ist erfindungsgemäß als organische Komponente bevorzugt.

Nach einer erfindungsgemäß bevorzugten Definition wird ein Stoffgemisch (bzw. Stoff) als Fett bezeichnet, wenn es zumindest ein Fettsäuretriglycerid beinhaltet (bzw. ist), bei einer Temperatur von 25°C fest ist und in Wasser im Wesentlichen nicht löslich ist. Fette können unter anderem tierischer oder pflanzlicher Herkunft sein.

Nach einer erfindungsgemäß bevorzugten Definition wird ein Stoffgemisch (bzw. Stoff) als Wachs bezeichnet, wenn es erstens mindestens einen Stoff mit langen, ungesättigten Alkylketten (üblicherweise >$C_{15}$) beinhaltet und zweitens bei einer Temperatur von 20°C-25°C knetbar und fest bis brüchig hart ist und bei einer Temperatur von 40°-45°C zu einer niedrig-viskosen Flüssigkeit schmilzt.

Der Fachmann ist ohne Weiteres dazu in der Lage, insbesondere aus den bekannten Ölen (z.B. Schmierölen), Fetten (z.B. Schmierfetten) und Wachsen, eine für das Korrosionsschutzmittel geeignete organische Komponente in einer geeigneten Konzentration (und gegebenenfalls mit geeigneten Zusatzstoffen) zu wählen, so dass auch die Lichtdurchlässigkeit des erfindungsgemäßen Korrosionsschutzmittels gegeben ist.

Da bei der Korrosion von Metallen Metallkationen entstehen, ist ein Indikator für Metallkationen besonders geeignet im Sinne der vorliegenden Erfindung. Folglich wird in einer bevorzugten Ausführungsform der vorliegenden Erfindung die Änderung des Absorptionsspektrums des Indikators durch koordinative Bindung des Indikators an ein Metallkation (d.h. Bildung eines Metallkation-Indikator-Komplexes) bewirkt. Der Indikator des erfindungsgemäßen Korrosionsschutzmittels kann in einer weiteren bevorzugten Ausführungsform mit einem Metallkation einen farbigen Komplex eingehen.

Das erfindungsgemäße Korrosionsschutzmittel wird bevorzugt auf einer Stahloberfläche eingesetzt. Bei der Korrosion einer Stahloberfläche entstehen Eisenkationen. Daher ist es erfindungsgemäß vorteilhaft, wenn die Änderung des Absorptionsspektrums des Indikators durch koordinative Bindung des Indikators an ein Eisenkation (d.h. Bildung eines Eisenkation-Indikator-Komplexes) bewirkt wird. Der Indikator des erfindungsgemäßen Korrosionsschutzmittels kann in einer weiteren bevorzugten Ausführungsform mit einem Eisenkation einen farbigen Komplex eingehen.

Metallionen-Indikatoren bzw. Eisenionen-Indikatoren sind im Stand der Technik schon lange bekannt. Bevorzugt ist der Indikator des erfindungsgemäßen Korrosionsschutzmittels ausgewählt aus der Gruppe der Phtalocyanine, insbesondere 29*H*,31*H*-Tetrabenzo[*b,g,l,q*][5,10,15,20]tetraazaporphin, und 1,10-Phenanthrolin, Octylgallat, Propylgallat, Salicylsäure, 2,2'-Bipyridin und 5-Methylresorcin und Gemischen davon. Phtalocyanine, insbesondere 29*H*,31*H*-Tetrabenzo[*b,g,l,q*][5,10,15,20]tetraazaporphin, sind als Indikator im Sinne der vorliegenden Erfindung besonders zu bevorzugen.

Der Indikator des erfindungsgemäßen Korrosionsschutzmittels ist bevorzugt ein chemischer Stoff, der auf eine Korrosion der Metalloberfläche insbesondere aufgrund von Komplexbildung mit einer Änderung seines Absorptionsspektrums im Bereich des ultravioletten, des sichtbaren oder des infraroten Lichts, vorzugsweise mit Farbumschlag, reagiert. Der Indikator ist bevorzugt ein Komplexbildner.

Das erfindungsgemäße Korrosionsschutzmittel wird bevorzugt eingepumpt bzw. injiziert (insbesondere in den Hohlraum zwischen Litze und Mantel einer ummantelten Litze, z.B. einer Monolitze). Daher ist das erfindungsgemäße Korrosionsschutzmittel vorteilhafterweise thixotrop. Insbesondere ist es in einem Temperaturbereich zwischen -25°C und 80°C, bevorzugt zwischen -10°C und 50°C, insbesondere zwischen -5°C und 30°C thixotrop. Dies erleichtert nämlich das Einpumpen bzw. Injizieren bei üblichen Umgebungstemperaturen.

Eine technische Lösung zur Thixotropierung des erfindungsgemäßen Korrosionsschutzmittels ist die Folgende: In einer weiteren, besonders bevorzugten Ausführungsform der vorliegenden Erfindung umfasst das Korrosionsschutzmittel ein thermoplastisches Elastomer als Thixotropiermittel. Bevorzugt ist das thermoplastische Elastomer ein lichtdurchlässiges, bevorzugt lineares, Diblock-Copolymer auf Styren und Ethylen/Propylen-Basis (S-E/P). Weitere lichtdurchlässige thermoplastische Elastomere sind dem Fachmann vertraut.

Es hat sich im Zuge der vorliegenden Erfindung weiterhin herausgestellt, dass ein Öl als organische Komponente für den Einsatz in einem Vorspannsystem besser geeignet war als ein Fett oder Wachs. Daher ist die organische Komponente im erfindungsgemäßen Korrosionsschutzmittel bevorzugt ein Öl, bevorzugt ein Silikonöl oder ein Mineralöl, insbesondere ein Mineralöl.

In einer weiteren bevorzugten Ausführung des erfindungsgemäßen Korrosionsschutzmittels ist die besagte organische Komponente ein Basisöl der American-Petroleum-Institute-Gruppen I-V, bevorzugt II-V, mehr bevorzugt II-III, insbesondere II. Besagtes Basisöl der Gruppe II hat den besonderen Vorteil, dass es klarer (d.h. lichtdurchlässiger) ist als ein Öl der Gruppe I, aber der Einsatz wirtschaftlicher ist als der eines Öles der Gruppe III.

Zweckmäßigerweise umfasst das erfindungsgemäße Korrosionsschutzmittel ferner einen Korrosionsinhibitor und/oder ein Antioxidans. Dies dient dazu, die Korrosion der Metalloberfläche weiter zu verlangsamen oder zu verhindern; zusätzlich dazu, dass das erfindungsgemäße Korrosionsschutzmittel bevorzugt eine Feuchtigkeitsbarriere darstellt, was sich aus dem Vorhandensein einer organischen Komponente, insbesondere ausgewählt aus einem Öl, Fett oder Wachs, ergibt. Der Korrosionsinhibitor ist beispielsweise ausgewählt aus Nonylphenoxyessigsäure (z.B. IRGACOR® NPA, BASF SE), N-Acylsarcosin (z.B. SARKOSYL® O, BASF SE), Aminphosphaten (z.B. IRGALUBE® 349, BASF SE) und Gemischen davon. Das Antioxidans ist beispielsweise ausgewählt aus 2,2'-Thiodiethylenbis(3,5-di-tert-butyl-hydroxyhydrocinnamat) (z.B. BRAD-CHEM® 395, Brad-Chem Ltd.), Alkyldiphenylamin (z.B. BRAD-CHEM® 332, Brad-Chem Ltd.), Pentaerythritoltetrakis(3,5-di-tert-butyl-4-hydroxyhydrocinnamat) (BRAD-CHEM® 391, Brad-Chem Ltd.), Octadecyl-3-(3,5-di-tert-butyl-4-hydroxyphenyl)propionat (BRAD-CHEM® 397, Brad-Chem Ltd.) und Gemischen davon. Im Stand der Technik sind weitere Korrosionsinhibitoren bzw. Antioxidantien bekannt. Der Fachmann ist ohne Weiteres dazu in der Lage, geeignete Korrosionsinhibitoren bzw. Antioxidantien in einer geeigneten Konzentration zu wählen, so dass die Lichtdurchlässigkeit des erfindungsgemäßen Korrosionsschutzmittels im Wesentlichen erhalten bleibt.

In einem weiteren Aspekt der vorliegenden Erfindung wird ein Verfahren zum Versehen einer von einem Mantel umgebenen Metallstruktur mit Korrosionsschutzmittel zur Verfügung gestellt. Dieses Verfahren ist dadurch gekennzeichnet, dass das erfindungsgemäße Korrosionsschutzmittel zwischen die Metallstruktur und den Mantel eingepumpt wird. Dafür ist es besonders zweckmäßig, wenn das erfindungsgemäße Korrosionsschutzmittel thixotrop ist, so dass es sich nach dem Einpumpen wieder verfestigen kann. Die Metallstruktur ist bevorzugt ein Spannstahl (insbesondere eine Litze), und kann zusätzlich noch mit einer Schicht (z.B. einer Zinkschicht) überzogen sein. Der Mantel ist bevorzugt aus Kunststoff, mehr bevorzugt aus einem thermoplastischen Kunststoff, z.B. Polyethylen, insbesondere hochdichtes Polyethylen ("HDPE").

In einem weiteren Aspekt der vorliegenden Erfindung wird eine Metallstruktur zur Verfügung gestellt. Diese ist dadurch gekennzeichnet, dass sie mit dem erfindungsgemäßen Korrosionsschutzmittel versehen ist. Die Metallstruktur ist bevorzugt ein Spannstahl (insbesondere eine Litze), und kann zusätzlich noch mit einer Schicht (z.B. einer Zinkschicht) überzogen sein. Die Metallstruktur kann auch ein Drahtseil, insbesondere ein Stahlseil sein. Insbesondere ist die Metallstruktur von einem Mantel umgeben und das Korrosionsschutzmittel befindet sich zwischen Mantel und Metallstruktur. Der Mantel ist bevorzugt aus Kunststoff, mehr bevorzugt aus einem thermoplastischen Kunststoff, z.B. Polyethylen, insbesondere hochdichtes Polyethylen ("HDPE").

Die Detektion des Indikators, der aufgrund von Korrosion z.B. eine bestimmte Farbe angenommen hat, kann beispielsweise durch Inspektion mit freiem Auge erfolgen. Vorteilhafterweise ist dafür ein lichtdurchlässiger Mantel der Metallstruktur vorzusehen.

Da die mit Korrosionsschutzmittel versehene Metallstruktur mitunter der Inspektion mit freiem Auge nach Verbau nicht mehr zugänglich ist, weil sie beispielsweise ein Spannstahl innerhalb einer Betonstruktur ist, können auch photometrische Messeinheiten, z.B. in regelmäßigen Abständen über die gesamte Länge, im Korrosionsschutzmittel vorgesehen sein. Besonders geeignet für die Detektion des Indikators, der aufgrund einer Korrosion eine Änderung seines Absorptionsspektrums vollzogen hat (z.B. eine bestimmte Farbe angenommen hat), ist jedoch eine Vorrichtung, die im Folgenden offenbart wird.

In einem weiteren Aspekt der vorliegenden Erfindung wird eine Vorrichtung an einer Metallstruktur zur Verfügung gestellt. Die Vorrichtung umfasst ein lichtdurchlässiges Element, welches vorzugsweise eine lichtdurchlässige Faser ist, und ein Korrosionsschutzmittel, welches sich auf einer Oberfläche der Metallstruktur befindet. Die Vorrichtung ist dadurch gekennzeichnet, dass das Korrosionsschutzmittel als das erfindungsgemäße Korrosionsschutzmittel ausgeführt ist, wobei das lichtdurchlässige Element als Lichtwellenleiter mit einer Grenzfläche zwischen dem Element und dem Korrosionsschutzmittel vorgesehen ist. Die Metallstruktur ist bevorzugt ein Spannstahl (insbesondere eine Litze), und kann zusätzlich noch mit einer Schicht (z.B. einer Zinkschicht) überzogen sein. Die Metallstruktur kann auch ein Drahtseil, insbesondere ein Stahlseil sein. Vorzugsweise ist die Metallstruktur Teil eines Bauwerks, insbesondere einer Betonkonstruktion.

Die erfindungsgemäße Vorrichtung ermöglicht die Detektion des Indikators, der auf eine Korrosion der Metalloberfläche mit einer Änderung des Absorptionsspektrums reagiert hat (z.B. mit der Bildung eines farbigen Indikators bzw. Ionen-Indikator-Komplexes), im Korrosionsschutzmittel durch Wechselwirkung des Indikators mit einem evaneszenten Feld, welches Feld von einem Lichtstrahl im als Lichtwellenleiter vorgesehenen lichtdurchlässigen Element erzeugt wird. Die Vorrichtung der vorliegenden Erfindung ist daher besonders gut dazu geeignet, die Überprüfung der Metallstruktur auf Korrosion zu erleichtern, denn durch die Vorrichtung wird die Überprüfung der Metallstruktur *in situ* ermöglicht, d.h. beispielsweise ohne dass die Metallstruktur (wenn sie z.B. ein Spannstahl ist) aus der Betonkonstruktion herausgezogen werden muss. Eine Möglichkeit, wie die Überprüfung umgesetzt wird, ist im Folgenden illustriert:

Das Korrosionsschutzmittel weist den Brechungsindex $n_2$ auf. Zwischen dem Korrosionsschutzmittel der Vorrichtung und dem lichtdurchlässigen Element der Vorrichtung besteht eine Grenzfläche, beispielsweise wird eine lichtdurchlässige Faser entlang der Längsachse der Metallstruktur durch das Korrosionsschutzmittel geführt. Das lichtdurchlässige Element (z.B. eine Glasfaser) ist hinsichtlich seines Brechungsindex $n_1$ (z.B. durch Vorsehen eines bestimmten Glasfasertyps) und seines Durchmessers so ausgeführt, dass, wenn ein Lichtstrahl in das lichtdurchlässige Element eingekoppelt wird, es an der Grenzfläche zur Totalreflexion des Lichtstrahls kommt - d.h. das lichtdurchlässige Element wird zum Lichtwellenleiter. Wenn der Lichtstrahl innerhalb des Lichtwellenleiters an der Grenzfläche totalreflektiert wird, kommt es zur Evaneszenz. Somit kann der Lichtstrahl auch mit Molekülen des Korrosionsschutzmittels jenseits der Grenzfläche in Wechselwirkung treten und von diesen gegebenenfalls absorbiert werden. Kommt es nun aufgrund von Korrosion zu einer Änderung des Absorptionsspektrums bei der Wellenlänge $\lambda_I$ (z.B. zu einer Farbänderung) beim Indikator im Korrosionsschutzmittel in der Nähe der Grenzfläche (auf molekularer Ebene befinden sich in der Nähe der Grenzfläche also beispielsweise $Fe^{2+}$-Indikator-Komplexe, die Licht mit der Wellenlänge $\lambda_I$ absorbieren, d.h. z.B. farbig sind), so verringert sich dementsprechend, nach Totalreflexion an der Grenzfläche, die Intensität des Lichtstrahls bei der Wellenlänge $\lambda_I$.

Beispielsweise kann bei der ersten Überprüfung (z.B. gleich nach Fertigstellung eines Bauwerks, in dem sich die Vorrichtung an der Metallstruktur befindet) ein Referenzspektrum eines eingekoppelten Lichtstrahls aufgenommen werden. Die Überprüfung wird in regelmäßigen zeitlichen Abständen wiederholt, dabei sind z.B. Intensitätsabnahmen bei der Wellenlänge $\lambda_I$ im aufgenommenen Spektrum des Lichtstrahls gegenüber dem Referenzspektrum ein Hinweis auf Korrosion der Metallstruktur.

Im Stand der Technik sind zwar Lichtwellenleiter im Zusammenhang mit der Überprüfung auf Korrosion bekannt, allerdings nicht im Zusammenhang mit einem Indikator, der auf eine Korrosion der Metalloberfläche mit einer Änderung seines Absorptionsspektrums im Bereich des ultravioletten, des sichtbaren oder des infraroten Lichts reagiert. Daher nimmt der folgende Stand der Technik die vorliegende Erfindung nicht vorweg, noch legt er sie nahe:

Die WO 2004/031738 A1 bezieht sich auf einen Lichtwellenleiter als Korrosionssensor. Der Lichtwellenleiter kann beispielsweise axial entlang der Oberfläche der zu überwachenden Struktur geführt werden oder um die Oberfläche der zu überwachende Metallstruktur gewunden sein. Allerdings ist der Lichtwellenleiter lediglich für die Messung der Temperatur bzw. zur Messung, ob Flüssigkeit vorhanden ist, vorgesehen. Eine Messung von korrosionsbedingter Absorptionsänderung eines Indikators wird in jenem Dokument nicht offenbart.

Die CN 203259173 U bezieht sich auf einen Korrosionsüberwachungssensor auf der Basis eines Lichtwellenleiters und ist für den Einsatz in Brücken vorgesehen. Die Überwachung gemäß jenem Dokument beruht nicht auf Detektion einer Absorptionsänderung eines Indikators.

Ferner offenbaren die WO 98/40728 A1 und die DE 10 2012 207 179 A1 weitere Vorrichtungen bzw. Verfahren zur Korrosionsüberwachung in Bauwerken, welche nicht auf Lichtwellenleitern beruhen: Der Gegenstand ersterer beruht auf Impedanzmessung an der Stahlbetonoberfläche. Der Gegenstand zweiterer ist ein Metallrohr, das eine mindestens zweischichtige Korrosionsschutzumhüllung mit einer oberen und einer unteren Schicht besitzt, dadurch gekennzeichnet, dass die untere Schicht so ausgerüstet ist, dass bei einer Beschädigung der darüberliegenden Schicht bzw. Schichten ein optisches oder elektrisches Signal detektiert werden kann.

Totalreflexion findet an der Grenzfläche eines optisch dichteren Mediums mit Brechungsindex $n_1$ und eines optisch dünneren Mediums mit Brechungsindex $n_2$ statt, wenn der Einfallswinkel des Lichts im optisch dichteren Medium an der Grenzfläche einen bestimmten Wert, den sogenannten Grenzwinkel der Totalreflexion, überschreitet. Die Vorstellung einer totalen, d.h. vollständigen, Reflexion einer Welle ist eine Idealisierung, weil auch der "vollständig" reflektierten Strahlung in der Praxis immer ein Teil durch Absorption verlorengeht. Der Begriff "Totalreflexion" im Sinne der Erfindung ist demgemäß nach einer praktischen Auslegung zu verstehen, wie es der Fachmann tut. Der Grenzwinkel $\Theta_c$ der Totalreflexion (dieser wird konventionsgemäß immer ausgehend von der Normalen, d.h. dem Lot, der Grenzfläche ermittelt) lässt sich wie folgt aus den Brechungsindizes der Medien, $n_2$ und $n_1$, berechnen:

$$\theta_c = \arcsin\left(\frac{n_2}{n_1}\right)$$

Daraus folgt auch, dass der Durchmesser des lichtdurchlässige Elements (z.B. der Glasfaser) einen gewissen Maximaldurchmesser nicht überschritten werden darf, damit der Grenzwinkel $\Theta_c$ möglichst bei keinem Reflexionsereignis unterschritten wird, wenn sich ein bestimmter Lichtstrahl im Element ausbreitet.

Ein lichtdurchlässiges Medium wird typischerweise dadurch zum Lichtwellenleiter, dass es von einem optisch dünneren Material umgeben ist, und das sich im Medium ausbreitende Licht aufgrund einer Totalreflexion an der Grenzfläche nicht aus dem Medium austreten kann und es stattdessen in einem Ausfallswinkel gleich dem Einfallswinkel reflektiert wird, und es so immer wieder zu einer erneuten Totalreflexion an der Grenzfläche kommt, während sich das Licht im Medium ausbreitet.

Das physikalische Phänomen der Evaneszenz wird in zahlreichen bekannten Messverfahren angewandt. Ein Beispiel dafür ist die ATR-Infrarotspektroskopie (*attenuated total reflection* - abgeschwächte Totalreflexion), für die Oberflächenuntersuchung an undurchsichtigen Stoffen wie z.B. Lackschichten.

Ein zentraler Parameter ist die Eindringtiefe $d_p$ der evaneszenten Welle. Diese wird als derjenige Abstand von der Grenzfläche definiert, bei dem die Amplitude des elektrischen Feldes nur noch 1/e-tel ($\approx$ 37 %) der Amplitude an der Grenzfläche entspricht. Für Licht der Wellenlänge $\lambda$ und dem Einfallswinkel $\Theta$ ergibt sich beim Übergang vom optisch dichteren Medium (z.B. dem lichtdurchlässigen Element mit Brechungsindex $n_1$) in ein optisch dünneres Medium (z.B. dem Korrosionsschutzmittel mit dem Brechungsindex $n_2$):

$$d_{\mathrm{p}} = \frac{\lambda}{2\pi\sqrt{n_1^2 \sin^2(\Theta) - n_2^2}}$$

Für einen typischen Winkel $\Theta$ im Bereich um 45° und ein typisches Brechungsindexverhältnis kann geschätzt werden, dass die Eindringtiefe ca. 1/5 bis 1/4 der Wellenlänge des einfallenden Lichtes beträgt, dabei nimmt die Eindringtiefe mit steigendem Brechungsindexverhältnis $n_1/n_2$ ab.

Da die Eindringtiefe bei Wellenlängen von 380 nm bis 780 nm (d.h. im sichtbaren Bereich des Lichts) typischerweise also im Submikrometerbereich liegt, ist es zweckmäßig, die Grenzfläche zur Erhöhung der Messempfindlichkeit vergrößern. Daher wird in einer bevorzugten Ausführungsform der Vorrichtung das lichtdurchlässige Element entlang der Längsachse der Metallstruktur im Korrosionsschutzmittel geführt, wobei die Länge des lichtdurchlässigen Elements im Korrosionsschutzmittel vorzugsweise zumindest 50%, bevorzugt zumindest 60%, mehr bevorzugt zumindest 70%, noch mehr bevorzugt zumindest 80%, insbesondere zumindest 90% der Länge der Metallstruktur beträgt. In einer besonders bevorzugten Ausführungsform ist das lichtdurchlässige Element im Korrosionschutzmittel um die Metallstruktur gewickelt.

Weiterhin kann das lichtdurchlässige Element gegebenenfalls aus mehreren Materialien verschiedener optischer Dichte bestehen. Beispielsweise kann das lichtdurchlässige Element streckenweise aus einer Glasfaser als Kern, ummantelt von einem optisch dünneren Glasmantel, bestehen.

In einem weiteren Aspekt der vorliegenden Erfindung wird ein Verfahren zur Überprüfung einer Metallstruktur, bevorzugt Spannstahl, insbesondere in Form einer Litze, auf Korrosion zur Verfügung gestellt. Dieses Verfahren ist dadurch gekennzeichnet, dass die Metallstruktur mit der erfindungsgemäßen Vorrichtung ausgestattet ist und umfasst:

- das Einkoppeln eines Lichtstrahls in das lichtdurchlässige Element der Vorrichtung,

- das zumindest teilweise Reflektieren des Lichtstrahls an besagter Grenzfläche zwischen dem Element und dem Korrosionsschutzmittel der Vorrichtung,

- das Auskoppeln des Lichtstrahls aus dem Element, und

- das Detektieren des ausgekoppelten Lichtstrahls.

Der einzukoppelnde Lichtstrahl muss jedenfalls zumindest eine Wellenlänge aufweisen, bei welcher bei Korrosion eine Änderung des Absorptionsspektrums des Indikators statt findet. Auch die Detektion muss zumindest bei dieser Wellenlänge statt finden. Zweckmäßigerweise ist dies eine Wellenlänge, bei welcher das Korrosionsschutzmittel in Abwesenheit von Korrosion nur in vernachlässigbarem Ausmaß absorbiert.

Der einzukoppelnde Lichtstrahl kann breitbandig sein (z.B. Weißlicht) oder monochromatisch, z.B. mit einer Wellenlänge beim Absorptionsmaximum des Indikators, wenn er aufgrund von Korrosion eine bestimmte Farbe angenommen hat. Beim einzukoppelnde Lichtstrahl kann es sich um Licht im für den Menschen sichtbaren Bereich (380 nm bis 780 nm Wellenlänge) und/oder im Ultraviolett- (zwischen 10 nm und 380 nm, bevorzugt zwischen 100 und 380 nm, mehr bevorzugt zwischen 170 und 380 nm, noch mehr bevorzugt zwischen 190 und 380 nm, insbesondere zwischen 250 und 380 nm Wellenlänge) bzw. im näheren Infrarot-Bereich (zwischen 780 nm und 10000 nm, bevorzugt zwischen 780 und 3500 nm, mehr bevorzugt zwischen 780 und 2600 nm, noch mehr bevorzugt zwischen 780 und 1400 nm, insbesondere zwischen 780 und 1100 nm Wellenlänge) handeln.

Geeignete Lichtquellen zum Erzeugen des einzukoppelnden Lichtstrahls (z.B. eine Glühlampe mit Wolframdraht, eine Xenon-Blitzlampe, eine Halogenlampe oder ein Laser) und geeignete Detektoren zum Detektieren des ausgekoppelten Lichtstrahls (z.B. eine Photozelle oder eine Photodiode) sind dem Fachmann vertraut. Der Fachmann ist auch ohne Weiteres in der Lage, gegebenenfalls weitere optische Elemente wie z.B. Farbfilter, Monochromatoren, Umlenkspiegel oder Linsen vor dem Einkoppeln oder nach dem Auskoppeln vorzusehen.

Weitere Definitionen:

Bei "ultraviolettem Licht" handelt es sich erfindungsgemäß um elektromagnetische Strahlung in einem Wellenlängenbereich zwischen 10 nm und 380 nm, bevorzugt zwischen 100 nm und 380 nm, mehr bevorzugt zwischen 170 nm und 380 nm, noch mehr bevorzugt zwischen 190 und 380 nm, insbesondere zwischen 250 nm und 380 nm.

Bei "sichtbarem Licht" handelt es sich erfindungsgemäß um elektromagnetische Strahlung in einem Wellenlängenbereich zwischen 380 nm und 780 nm.

Bei "infrarotem Licht" handelt es sich erfindungsgemäß um elektromagnetische Strahlung im näheren Infrarot-Bereich, in einem Wellenlängenbereich zwischen 780 nm und 10000 nm, bevorzugt zwischen 780 nm und 3500 nm, mehr bevorzugt zwischen 780 und 2600 nm, noch mehr bevorzugt zwischen 780 nm und 1400 nm, insbesondere zwischen 780 nm und 1100 nm.

Als "Farbumschlag" ist zunächst ein Wechsel von einer Farbe zur anderen zu betrachten. In Abwesenheit von Korrosion kann der Indikator aber auch farblos gewesen sein und erst bei Korrosion eine Farbe annehmen (z.B. durch koordinative Bindung eines Eisenkations), auch dies wird erfindungsgemäß als Farbumschlag bezeichnet. Auch ein umgekehrter Ablauf ist denkbar, d.h. der Wechsel des Indikators von farbig auf farblos in Folge von Korrosion; auch dies wird erfindungsgemäß als Farbumschlag bezeichnet.

Die erfindungsgemäße Eigenschaft der Lichtdurchlässigkeit des Korrosionsschutzmittels ist in Abhängigkeit des ausgewählten Indikators zu betrachten: Die Lichtdurchlässigkeit muss zumindest für Licht mit einer ausgewählten Wellenlänge gegeben sein, bei welcher Wellenlänge sich das Absorptionsspektrum des Indikators korrosionsbedingt ändern kann.

In einer erfindungsgemäß bevorzugten Definition ist der Begriff "lichtdurchlässig" wie folgt auszulegen: Die Extinktion für eine bestimmte Wellenlänge ist der dekadische Logarithmus des Verhältnisses von der Intensität der in das Medium einfallenden Strahlung, $I_0$, zur Intensität der aus dem Medium ausfallenden (d.h. detektierten) Strahlung, I für eine bestimmte Wellenlänge. Die Extinktion von destilliertem Wasser für die Schichtdicke d bei 25°C bei Normaldruck sei definitionsgemäß 0 (d.h. definitionsgemäß: $I_0$=I). Bei unveränderter Intensität der einfallenden Strahlung, $I_0$, (d.h. bei Verwendung derselben Lichtquelle) bei denselben Umweltbedingungen für die selbe Schichtdicke d wird nun die relative Extinktion des Korrosionsschutzmittels bestimmt, indem die Intensität $I_K$ gemessen wird; die relative Extinktion ergibt sich dann aus dem dekadischen Logarithmus des Verhältnisses von I zu $I_K$. Ein Korrosionsschutzmittel gilt als lichtdurchlässig, wenn bei einer ausgewählten elektromagnetischen Wellenlänge (bzw. einem ausgewählten Wellenlängenbereich von z.B. 10 oder 100 nm Breite) innerhalb von 10 nm bis 10000 nm, bevorzugt innerhalb von 170 nm bis 3500 nm, mehr bevorzugt innerhalb von 190 nm bis 2600 nm, noch mehr bevorzugt innerhalb von 320 nm bis 1400 nm, insbesondere innerhalb von 380 nm bis 780 nm diese relative Extinktion unter 4 liegt, bevorzugt unter 1, mehr bevorzugt unter 0,5, noch mehr bevorzugt unter 0,25, insbesondere unter 0,125 oder gar unter 0,0625. (Die relative Extinktion kann auch negativ sein, d.h. das Korrosionsschutzmittel ist bei der betreffenden Wellenlänge lichtdurchlässiger als Wasser). Eine übliche (und daher zu bevorzugende) Schichtdicke d bei der Ermittlung der Extinktion ist 1 cm, dies entspricht einer gebräuchlichen Küvette im Labor. Die Ermittlung der relativen Extinktion kann beispielsweise im Wellenlängenbereich von 190 nm bis 1100 nm in einem laborüblichen Spektrophotometer mit Küvetten-Einsatz ermittelt werden, wobei die erwähnte Wasserprobe als sogenannter "Blank" dient; auch entsprechende Verdünnungsreihen bei stärker absorbierenden Korrosionsschutzmitteln sind für den Fachmann ohne weiteres durchführbar, um innerhalb des photometrischen Linearitätsbereichs des Spektrophotometers arbeiten zu können.

Insbesondere bedeutet "lichtdurchlässig" im Sinne der Erfindung "transparent", d.h. für den Menschen sichtbares Licht wird zumindest in einem ausgewählten für den Menschen sichtbaren Farbbereich im Wesentlichen nicht, insbesondere in jedem für den Menschen sichtbaren Farbbereich im Wesentlichen nicht, absorbiert (z.B. wie bei Wasser oder einem Silikonöl bzw. wie bei Ölen, die als "wasserklar" bezeichnet werden).

Die vorliegende Erfindung wird ferner anhand der folgenden Beispiele illustriert, auf welche sie selbstverständlich nicht eingeschränkt ist.

**Beispiel 1 - Herstellung des Korrosionsschutzmittels**

Rezeptur:

| Funktion | Produkt | Hersteller | Inhaltsstoff(e) | Gew-% |
|---|---|---|---|---|
| Organische Komponente | PURITY 1810 Basisöl | Petro-Canada | | 78,4 |
| Thermoplastisches Elastomer | G1701 E | Kraton Polymers | Lineares Diblock Co-polymer auf Styren- und Ethylen/Propylenbasis (S-E/P) | 18,0 |
| Korrosionsinhibitor | IRGACOR® NPA | BASF SE | Nonylphenoxyessigsäure | 1,5 |
| Antioxidans | BRAD-CHEM® 395 | Brad-Chem Ltd. | 2,2'-Thiodiethylenbis(3,5-di-tert-butyl-hydroxyhydrocinnamat) | 0,6 |
| Indikator | Gesättigte Lösung in PURITY 1810 Basisöl | | 29$H$,31$H$-Tetrabenzo[$b,g,l,q$][5,10,15,20] tetraazaporphin | 1,5 |
| | | | | 100 |

Vorab wurde eine gesättigte Indikatorlösung in einem geringen Teil des Basisöls hergestellt. Weiters wurde vorab das thermoplastische Elastomer in einem weiteren, geringen Teil des Basisöls suspendiert. Zur Herstellung des Korrosionsschutzmittels wurde wie folgt verfahren:

Der restliche, überwiegende Teil des Basisöls wurde vorgelegt und mit dem Korrosionsinhibitor, dem Antioxidans und der Indikatorlösung gemäß obiger Rezeptur vermischt. Dann wurde das suspendierte Elastomer gemäß obiger Rezeptur (gerechnet auf das Gewicht des noch nicht suspendierten Elastomers) zugegeben. Zur Mischung wurde ein langsam laufendes Rührwerk mit Wandabstreifern verwendet. Der Prozess wurde durch Erwärmen des Basisöls auf 40°C beschleunigt.

Durch Zugabe des Elastomers steigt die Viskosität der Mischung. Der Austrag des Korrosionsschutzmittels erfolgte daher über Zwangsförderung.

**Beispiel 2 - Korrosionsindikatortest**

Um das Korrosionsschutzmittel gemäß Beispiel 1 hinsichtlich seiner Fähigkeit zur Korrosionsindikation zu testen, wurde ein leicht feuchter Stahlschwamm mit rostenden Stellen in ein klares Glasgefäß eingelegt. Dieses Glasgefäß wurde hernach mit dem Korrosionsschutzmittel gefüllt und wurde bei Raumtemperatur inkubiert. Durch die weiter fortschreitende Korrosion des Metallschwammes kam es innerhalb von zwei Tagen zur intensiv-roten Verfärbung des Korrosionsschutzmittels, beginnend von den Regionen des Korrosionsschutzmittels nahe der rostenden Stellen des Stahlschwammes. Mit der Zeit setzte sich die Verfärbung von diesen Regionen immer weiter ins Korrosionsschutzmittel fort.

**Beispiel 3 - Anwendungen**

A) Zur Herstellung einer Monolitze wurde das gemäß Beispiel 1 hergestellte Korrosionsschutzmittel auf eine Spannstahllitze aus sieben kaltgezogenen Drähten der Güte St 1570/ 1770 in einer Menge von 60 Gramm pro Meter Litze unter Druck aufgetragen. Die Ummantelung der Litze erfolgte mit Polyethylen.

B) Zum Versehen einer ummantelten Litze mit Korrosionsschutzmittel wurde das gemäß Beispiel 1 hergestellte Korrosionsschutzmittel mit einer luftdruckbetriebenen Zahnradpumpe mit Druckfolgeplatte ("UNIPUMP 5:1 air-driven gear pump", WERBA-CHEM GMBH) bei einem Überdruck von 0,5 bar zwischen Mantel und Litze eingepumpt.

C) Zum Versehen eines Litzenankerkopfs mit Korrosionsschutzmittel wurde das gemäß Beispiel 1 hergestellte Korrosionsschutzmittel mit einer luftdruckbetriebenen Zahnradpumpe mit Druckfolgeplatte ("UNIPUMP 5:1 air-driven gear pump", WERBA-CHEM GMBH) bei einem Überdruck von 0,5 bar in den Litzenankerkopf eingepumpt.

**Patentansprüche**

1. Korrosionsschutzmittel für eine Metalloberfläche, wobei das Korrosionsschutzmittel eine organische Komponente, insbesondere ein Öl, Fett oder Wachs, umfasst, **dadurch gekennzeichnet, dass** das Korrosionsschutzmittel lichtdurchlässig ist und ferner einen Indikator, der auf eine Korrosion der Metalloberfläche mit einer Änderung seines Absorptionsspektrums im Bereich des ultravioletten, des sichtbaren oder des infraroten Lichts, insbesondere mit Farbumschlag, reagiert, umfasst.

2. Korrosionsschutzmittel gemäß Anspruch 1, **dadurch gekennzeichnet, dass** besagte Änderung des Absorptionsspektrums durch koordinative Bindung des Indikators an ein Metallkation bewirkt wird.

3. Korrosionsschutzmittel gemäß Anspruch 2, **dadurch gekennzeichnet, dass** das Metallkation ein Eisenkation ist.

4. Korrosionsschutzmittel gemäß einem der vorhergehenden Ansprüche, **dadurch gekennzeichnet, dass** der Indikator ausgewählt ist aus der Gruppe der Phtalocyanine, insbesondere 29*H*,31*H*-Tetrabenzo[*b,g,l,q*][5,10,15,20] tetraazaporphin, 1,10-Phenanthrolin, Octylgallat, Propylgallat, Salicylsäure, 2,2'-Bipyridin, 5-Methylresorcin und Gemischen davon.

5. Korrosionsschutzmittel gemäß einem der vorhergehenden Ansprüche, **dadurch gekennzeichnet, dass** es thixotrop ist.

6. Korrosionsschutzmittel gemäß Anspruch 5, **dadurch gekennzeichnet, dass** es in einem Temperaturbereich zwischen -25°C und 80°C, bevorzugt zwischen -10°C und 50°C, insbesondere zwischen -5°C und 30°C thixotrop ist.

7. Korrosionsschutzmittel gemäß Anspruch 5 oder 6, ferner umfassend ein thermoplastisches Elastomer als Thixotropiermittel.

8. Korrosionsschutzmittel gemäß einem der vorhergehenden Ansprüche, **dadurch gekennzeichnet, dass** die organische Komponente ein Basisöl der American-Petroleum-Institute-Gruppen I-V, bevorzugt II-V, mehr bevorzugt II-III, insbesondere II, ist.

9. Korrosionsschutzmittel gemäß einem der vorhergehenden Ansprüche, **dadurch gekennzeichnet, dass** es ferner einen Korrosionsinhibitor und/oder ein Antioxidans umfasst.

10. Verfahren zum Versehen einer von einem Mantel umgebenen Metallstruktur mit Korrosionsschutzmittel, **dadurch gekennzeichnet, dass** Korrosionsschutzmittel gemäß einem der vorhergehenden Ansprüche zwischen die Metallstruktur und den Mantel eingepumpt wird.

11. Metallstruktur, **dadurch gekennzeichnet, dass** sie mit dem Korrosionsschutzmittel gemäß einem der Ansprüche 1-7 versehen ist.

12. Metallstruktur gemäß Anspruch 11, **dadurch gekennzeichnet, dass** sie von einem Mantel umgeben ist und sich das Korrosionsschutzmittel zwischen Mantel und Metallstruktur befindet.

13. Metallstruktur gemäß Anspruch 11 oder 12, wobei die Metallstruktur ein Spannstahl, insbesondere eine Litze, ist.

14. Vorrichtung an einer Metallstruktur, umfassend ein lichtdurchlässiges Element, wobei das Element vorzugsweise eine lichtdurchlässige Faser ist, und ein Korrosionsschutzmittel, welches sich auf einer Oberfläche der Metallstruktur befindet, **dadurch gekennzeichnet, dass** das Korrosionsschutzmittel gemäß einem der Ansprüche 1 - 7 ausgeführt ist, wobei das Element als Lichtwellenleiter mit einer Grenzfläche zwischen dem Element und dem Korrosionsschutzmittel vorgesehen ist.

15. Verfahren zur Überprüfung einer Metallstruktur, bevorzugt Spannstahl, insbesondere in Form einer Litze, auf Korrosion, **dadurch gekennzeichnet, dass** die Metallstruktur mit einer Vorrichtung gemäß Anspruch 14 ausgestattet ist, umfassend

   - das Einkoppeln eines Lichtstrahls in das Element der Vorrichtung,
   - das zumindest teilweise Reflektieren des Lichtstrahls an besagter Grenzfläche zwischen dem Element und dem Korrosionsschutzmittel der Vorrichtung,
   - das Auskoppeln des Lichtstrahls aus dem Element, und
   - das Detektieren des ausgekoppelten Lichtstrahls.

Europäisches
Patentamt

European
Patent Office

Office européen
des brevets

## EUROPÄISCHER RECHERCHENBERICHT

**Nummer der Anmeldung**

EP 15 18 9545

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 646 400 A (PEREZ IGNACIO M [US] ET AL) 8. Juli 1997 (1997-07-08)<br><br>* das ganze Dokument *<br>----- | 1-7, 10-12, 14,15 | INV.<br>C09D5/33<br>C09D5/04<br>C09D5/08<br>C09D5/22 |
| X | US 2010/107741 A1 (PETTY JON A [US]) 6. Mai 2010 (2010-05-06)<br>* Seite 1, Absatz 5-11; Abbildungen 1, 2 *<br>* Seite 1, Absatz 14 - Seite 2, Absatz 19; Ansprüche 1-7, 9, 17-18 *<br>----- | 1-4,8-13 | C09D5/29<br>E04C5/01<br>E04C5/08<br>G01N31/22<br>G01N17/00<br>G01N21/64 |
| X | GB 2 425 835 A (UNIV SHEFFIELD HALLAM [GB]) 8. November 2006 (2006-11-08)<br>* das ganze Dokument *<br>----- | 1,2,5-7, 10-15 | G01N21/91 |
| X | WO 2009/126802 A1 (BATTELLE MEMORIAL INSTITUTE [US]; LALGUDI RAMANATHAN S [US]; MCGRAW BA) 15. Oktober 2009 (2009-10-15)<br>* Seite 1, Absatz 2 - Seite 2, Absatz 5 *<br>* Seite 2, Absatz 7 - Seite 4, Absatz 9; Tabelle 1 *<br>* Seite 4, Absatz 10 - Seite 6, Absatz 20 *<br>* Seite 7, Absatz 22; Abbildungen 1, 2 *<br>* Seite 8, Absatz 24 - Seite 9, Absatz 34; Beispiele 1-3 *<br>* Seite 10, Absatz 40 *<br>* Seiten 1-14 *<br>-----<br><br>-/-- | 1-3,5-8, 10-13 | |

**RECHERCHIERTE SACHGEBIETE (IPC)**

C09D
E04C
G01N

Der vorliegende Recherchenbericht wurde für alle Patentansprüche erstellt

| Recherchenort | Abschlußdatum der Recherche | Prüfer |
|---|---|---|
| München | 4. April 2016 | Handrea-Haller, M |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

EP 15 18 9545

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/068824 A1 (FRANKEL GERALD S [US] ET AL) 10. April 2003 (2003-04-10)<br>* Seite 1, Absatz 3-6 *<br>* Seite 1, Absatz 9 - Seite 2, Absatz 14 *<br>* Seite 4, Absatz 64 - Seite 6, Absatz 74 *<br>* Seite 6, Absatz 78-79 *<br>* Seite 8, Absatz 87-88; Tabelle 1 *<br>* Seite 9, Absatz 100 - Seite 10, Absatz 101; Tabelle 2 *<br>* Seite 10, Absatz 107 - Seite 12, Absatz 117; Tabelle 3 *<br>* Seite 14, Absatz 124-125 *<br>* Seite 15, Absatz 138 *<br>* Seite 16, Absatz 142-144 *<br>----- | 1,5,6, 10,11 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 4. April 2016 | Handrea-Haller, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    ........................................................................
& : Mitglied der gleichen Patentfamilie, übereinstimmendes
    Dokument

EPO FORM 1503 03.82 (P04C03)

EP 3 156 460 A1

**ANHANG ZUM EUROPÄISCHEN RECHERCHENBERICHT
ÜBER DIE EUROPÄISCHE PATENTANMELDUNG NR.**

EP 15 18 9545

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2016

| Im Recherchenbericht angeführtes Patentdokument | Datum der Veröffentlichung | Mitglied(er) der Patentfamilie | Datum der Veröffentlichung |
|---|---|---|---|
| US 5646400 A | 08-07-1997 | KEINE | |
| US 2010107741 A1 | 06-05-2010 | AU 2009320098 A1<br>CA 2741361 A1<br>GB 2477877 A<br>US 2010107741 A1<br>US 2012009684 A1<br>WO 2010062614 A1 | 03-06-2010<br>03-06-2010<br>17-08-2011<br>06-05-2010<br>12-01-2012<br>03-06-2010 |
| GB 2425835 A | 08-11-2006 | EP 1886115 A1<br>GB 2425835 A<br>GB 2434447 A<br>WO 2006120389 A1 | 13-02-2008<br>08-11-2006<br>25-07-2007<br>16-11-2006 |
| WO 2009126802 A1 | 15-10-2009 | EP 2265677 A1<br>JP 2011516891 A<br>US 2011053275 A1<br>WO 2009126802 A1 | 29-12-2010<br>26-05-2011<br>03-03-2011<br>15-10-2009 |
| US 2003068824 A1 | 10-04-2003 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3806350 A1
- DE 3644414 A1
- EP 0105839 A2
- DE 4106309 A1
- EP 0771593 A2
- WO 2013185131 A1

- DE 102004050150 A1
- DE 102005055028 A1
- WO 2004031738 A1
- CN 203259173 U
- WO 9840728 A1
- DE 102012207179 A1